(19) Europäisches Patentamt
European Patent Office
Office européen des brevets

(11) **EP 3 613 714 B1**

(12) **EUROPEAN PATENT SPECIFICATION**

(45) Date of publication and mention
of the grant of the patent:
**22.03.2023   Bulletin 2023/12**

(21) Application number: **18788445.7**

(22) Date of filing: **30.03.2018**

(51) International Patent Classification (IPC):
**C04B 26/06** (2006.01)     **C08F 20/18** (2006.01)
**C08L 33/08** (2006.01)     **C04B 111/54** (2006.01)
**C04B 103/00** (2006.01)

(52) Cooperative Patent Classification (CPC):
(C-Sets available)
**C04B 26/06; C08F 20/18; C08L 33/08;**
C04B 2103/0046; C04B 2103/0065; C04B 2111/545

(Cont.)

(86) International application number:
**PCT/KR2018/003796**

(87) International publication number:
**WO 2018/194292 (25.10.2018 Gazette 2018/43)**

(54) **COMPOSITION FOR ARTIFICIAL MARBLE, AND ARTIFICIAL MARBLE**

ZUSAMMENSETZUNG FÜR KÜNSTLICHEN MARMOR SOWIE KÜNSTLICHER MARMOR

COMPOSITION POUR MARBRE ARTIFICIEL, ET MARBRE ARTIFICIEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.04.2017   KR 20170049987**

(43) Date of publication of application:
**26.02.2020   Bulletin 2020/09**

(73) Proprietor: **LG Hausys, Ltd.
Seoul 07326 (KR)**

(72) Inventors:
• **YUE, Seong-Hoon**
  **Seoul 07796 (KR)**
• **PARK, Hwan-Seok**
  **Seoul 07796 (KR)**
• **AN, Hai-Yan**
  **Seoul 07796 (KR)**
• **NAM, Hae-Rim**
  **Seoul 07796 (KR)**
• **LEE, Sung-Young**
  **Seoul 07796 (KR)**

(74) Representative: **Wynne-Jones IP Limited
Southgate House
Southgate Street
Gloucester, Gloucestershire GL1 1UB (GB)**

(56) References cited:
EP-A1- 1 081 111          WO-A1-2011/152578
JP-A- 2015 030 636        JP-A- 2015 030 636
JP-B2- 4 222 724          KR-A- 20050 013 678
KR-A- 20160 050 782       KR-A- 20170 039 822
US-A- 3 663 493           US-B1- 6 323 259

• **Miwon Specialty Chemical Co. Ltd.: "Miwon
Brochure", , 31 December 2014 (2014-12-31),
pages 1-22, XP055873131, Retrieved from the
Internet:
URL:http://www.toyochem.co.jp/pdf/miwon-br
ochure.pdf [retrieved on 2021-12-15]**

EP 3 613 714 B1

(52) Cooperative Patent Classification (CPC): (Cont.)

C-Sets
**C04B 26/06, C04B 14/062, C04B 14/28,
C04B 14/303, C04B 14/304, C04B 20/008**

**Description**

**BACKGROUND**

1. Technical Field

The present disclosure relates to a composition for artificial marble and the artificial marble.

2. Description of the Related Art

In general, artificial marble can be produced by curing a resin comprising a natural ore powder or a synthetic inorganic material powder as a filler, and then molding it with a compression press. A thermoplastic resin may be used as a resin material for such artificial marble, and may be molded into various shapes by heat, such that it may be applied to various fields such as tables, circular columns, wall materials, furniture, various interior materials, indirect lighting panels, interior accessories, and the like.

However, conventional artificial marbles that are currently widely used are not sufficiently high in elongation. Therefore, when a wash basin having a square shape or a deep depth is molded, cracks or breakage may occur during thermoforming of a resin for producing a three-dimensional shape, such as a round column.

US6323259 B1 discloses a composition for artificial marble.

**SUMMARY**

The present invention is set out in the appended claims. Any embodiments, aspects or examples falling outside the scope of the claims is shown for illustrative purposes only and does not form part of the present invention.

In one aspect of the present disclosure, there is provided a composition for an artificial marble, which has improved elongation, thereby exhibiting an excellent high-temperature moldability, and at the same time an excellent tensile strength.

In another aspect of the present disclosure, there is provided an artificial marble, which has improved elongation, thereby exhibiting an excellent high-temperature moldability, and at the same time an excellent tensile strength.

The above aspects and other aspects and features of the present disclosure will become apparent to those of ordinary skill in the art upon review of the following description of specific embodiments.

One embodiment of the present disclosure provides a composition for artificial marble as recited in claim 1.

Another embodiment of the present disclosure provides an artificial marble formed by thermosetting the composition for artificial marble as defined in claim 5.

The composition for artificial marble and the artificial marble have improved elongation to achieve an excellent high-temperature moldability and at the same time an excellent tensile strength.

**BRIEF DESCRIPTION OF DRAWINGS**

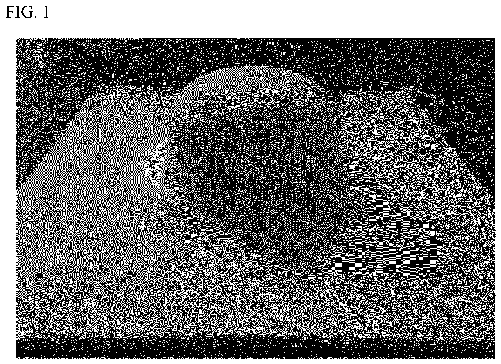

Fig. 1 is a photograph showing an artificial marble molded using a composition for artificial marble according to an embodiment of the present disclosure.

**DETAILED DESCRIPTION**

Hereinafter, embodiments of the present invention will be described in detail with reference to the accompanying drawings. It should be understood that the present invention is not limited to the following embodiments, and that the embodiments are provided for illustrative purposes only. The scope of the invention should be defined only by the accompanying claims.

For clarity of the present disclosure, parts that are not relevant to the description are omitted, and the same or similar components are denoted by the same reference numerals throughout the specification.

In the drawings, the thicknesses are enlarged to clearly indicate multiple layers and regions. Further, in the drawings, for the convenience of description, the thicknesses of some layers and regions are exaggerated.

As used herein, when any structure is formed on an upper (or lower) part of a substrate, it means not only that any structure is formed in contact with an upper (or lower) surface of a substrate, but also that there is no other structure between the substrate and any structure formed on (or under) the substrate.

According to the invention there is provided a composition for artificial marble including a bifunctional (meth)acrylate-based monomer and a bifunctional (meth)acrylatebased oligomer.

Conventional artificial marbles that are currently widely used are in general not sufficiently high in elongation.

Therefore, when a wash basin having a square shape or a deep depth, round column, or the like is molded, cracks or broken parts may occur during thermoforming of a resin for producing a three-dimensional shape.

To this end, in one embodiment of the present disclosure, the inventive composition for artificial marble includes a bifunctional (meth)acrylate-based monomer and a bifunctional (meth)acrylate-based oligomer, as crosslinking agents. Thereby, improved elongation and excellent high-temperature moldability can be realized.

Accordingly, the artificial marble made from the composition for artificial marble can effectively prevent cracking or breakage on the surface even when the artificial marble is molded into a three-dimensional shape. At the same time, the artificial marble made from the composition for artificial marble can have a high tensile strength.

In the present specification, as used herein, the term "bifunctional" indicates that there are two acrylate groups.

The bifunctional (meth)acrylate-based monomer may have a glass transition temperature in the range of -25°C to 55°C. The glass transition temperature may be measured by differential scanning calorimetry (DSC).

The monomer is mixed with a thermal initiator (Luperox 10M75), and then slowly cured at a low temperature of 60 degrees or lower to obtain a homopolymer. The homopolymer thus obtained may be placed in DSC (DSC8000, Perkin Elmer) to measure Tg as a thermal transition temperature.

Within the glass transition temperature range, the elongation can be sufficiently improved, and the artificial marble made from the composition for artificial marble can realize excellent surface appearance without cracking or breakage on the surface even when molded into a three-dimensional shape under high temperature conditions.

The bifunctional (meth)acrylate-based monomer has a molecular weight of from 330 g/mole to 1,500 g/mole. When the bifunctional (meth)acrylate-based monomer having a molecular weight of less than the above-mentioned molecular weight is used, cure shrinkage may be increased and elongation is not sufficient even when heat is applied. When the molecular weight is exceeded, bubbles may be generated inside the artificial marble.

The bifunctional (meth)acrylate-based monomer may include, but is not limited to 1,2-ethylene glycol diacrylate, 1,12-dodecanediol acrylate, 1,4-butanediol di(meth)acrylate, 1,6-hexanediol di(meth)acrylate, neopentyl glycol di(meth)acrylate, polyethylene glycol 200 di(meth)acrylate, polyethylene glycol 400 di(meth)acrylate, polyethylene glycol 600 di(meth)acrylate, neopentyl glycol adipate di(meth)acrylate, hydroxyl pivalic acid neopentyl glycol di(meth)acrylate, dicyclopentanyl di(meth)acrylate, caprolactone modified dicyclopentenyl di(meth)acrylate, ethylene oxide modified di(meth)acrylate, di(meth)acryloxyethyl isocyanurate, allylated cyclohexyl di(meth)acrylate, tricyclodecane dimethanol (meth)acrylate, dimethylol dicyclopentane di(meth)acrylate, ethylene oxide modified hexahydrophthalic acid di(meth)acrylate, tricyclodecane dimethanol (meth)acrylate, neopentyl glycol modified trimethylpropane di(meth)acrylate, adamantane di(meth)acrylate, 9,9-bis[4-(2-acryloyloxyethoxy)phenyl]fluorine, and combinations thereof.

The bifunctional (meth)acrylate-based oligomer has a glass transition temperature in the rage of 45°C to 105°C. The glass transition temperature is measured by differential scanning calorimetry (DSC) (DSC8000, Perkin Elmer).

Within the glass transition temperature range, the elongation can be sufficiently improved, and the artificial marble made from the composition for artificial marble can realize excellent surface appearance without cracking or breakage on the surface even when molded into a three-dimensional shape under high temperature conditions. When the glass transition temperature is lower than the above range, the marble may have a lower hardness and feel rubbery. When the glass transition temperature is higher than the above range, bending and post-deformation of the artificial marble, which is a cured product of the composition, may occur.

The bifunctional (meth)acrylate-based oligomer has a weight average molecular weight in the range of 20,000gjmole to 120,000g/mole. The weight average molecular weight is measured by gel permeation chromatography (GPC, alliance 2695, Waters). When the weight average molecular weight of the bifunctional (meth)acrylate oligomer is less than the above range, the viscosity is lowered and nonuniformity occurs due to a precipitation of the inorganic substance. When the weight average molecular weight exceeds the above range, internal bubbles are generated by a boiling of the oligomer during the thermoforming.

The bifunctional (meth)acrylate-based oligomer may include, for example, at least one selected from the group consisting of a polymethyl methacrylate-based oligomer, a polyethyl methacrylate-based oligomer, a polypropyl methacrylate-based oligomer, a polymethyl dimethacrylate-based oligomer, a polyethyl dimethacrylate-based oligomer, a polydimethyl methacrylate-based oligomer, a polydiethyl methacrylate-based oligomer, a polyethylene glycol di(meth)acrylate-based oligomer, a polyurethane-based oligomer, and combinations thereof.

The composition may include 0.18% to 0.7% by weight of the bifunctional (meth)acrylatebased monomer.

The artificial marble composition includes the bifunctional (meth)acrylate-based monomer in a content within the above range, so that the thermosetting reaction can be sufficiently promoted, and the immigration phenomenon occurring when unreacted monomers are present in the artificial marble produced from the composition for artificial marble can be effectively prevented. For example, when unreacted monomers are present in the artificial marble composition, yellowing may occur on the surface of the artificial marble produced from the artificial marble composition over time, resulting in color difference, and reduced quality in the artificial marble.

In addition, the composition may include 0.18% to 1% by weight of the bifunctional (meth)acrylate-based oligomer.

The artificial marble composition includes the bifunctional (meth)acrylate-based oligomer in a content within the above range, so that the thermosetting reaction can be sufficiently promoted, and the immigration phenomenon occurring when unreacted oligomers are present in the artificial marble produced from the composition for artificial marble can be effectively prevented.

The composition for artificial marble includes both the bifunctional (meth)acrylatebased monomer and the bifunctional (meth)acrylate-based oligomer, the bifunctional (meth)acrylate-based monomer and the bifunctional (meth)acrylate oligomer may be included in an amount of from about 0.36% to about 1.7% by weight as a whole.

For example, the relative ratio of the bifunctional (meth)acrylate-based monomer to the bifunctional (meth)acrylate-based oligomer may be in the range of about 1:13 to about 1:105.

For example, when the content of the bifunctional (meth)acrylate-based monomer exceeds the above range, the viscosity becomes too low, and the composition for artificial marble comprising the same may easily boil up when curing, making molding difficult. When the content of the bifunctional (meth)acrylate-based oligomer is in excess of the above range, a large amount of air bubbles is generated in the process of producing artificial marble from the composition for artificial marble comprising the same, and the specific gravity and density of the artificial marble are lowered and the mechanical properties such as flexural strength may be lowered.

The composition for artificial marble may further include at least one selected from the group consisting of a thermal initiator, a crosslinking agent, a defoaming agent, a coupling agent, and combinations thereof.

The (meth)acrylic resin syrup is formed by subjecting a composition for a syrup comprising a (meth)acrylic monomer to thermal polymerization or photopolymerization reaction, wherein the (meth)acrylic monomer may include alkyl group-containing (meth)acrylate-based monomer, hydroxy-containing (meth)acrylate-based monomer, carboxyl group-containing (meth)acrylate-based monomer, nitrogen-containing (meth)acrylate-based monomer, and combinations thereof.

Further, the composition for syrup may further include, for example, a thermal initiator, a photoinitiator, an organic solvent, and the like.

The resin composition for syrup may include, but is not limited to, about 0.2 part to about 0.4 part by weight of a thermal initiator or photoinitiator, based on 100 parts by weight of the (meth)acrylic monomer.

The (meth)acrylic resin syrup is included in an amount of 32% to 38% by weight. When the content of the (meth)acrylic resin syrup is less than about 32% by weight, cracks may occur in the artificial marble as a cured product. When the content exceeds about 38% by weight, the surface quality such as a surface feeling like a plastic product may be lowered.

The (meth)acrylic resin syrup may have a conversion rate of about 80% to about 95%, and the conversion rate refers to a polymerization conversion ratio of the monomer contained in the composition for syrup.

The conversion rate is obtained by dropping 10,000 g of (meth)acrylic resin syrup into tetrahydrofuran (THF) as a solvent, shaking the solution with Wisshaker (SHO-2D) for 24 hours, filtering (meth)acrylic polymer precipitated in the solvent, drying in a vacuum oven at 60°C for 24 hours, and then drying to measure the mass of the solid formed. Specifically, the conversion rate is measured according to the following formula 1 using the mass of the solid:

[Formula 1]

$$\text{Conversion rate \% } = M2/M1 \times 100$$

wherein M1 is the mass of (meth)acrylic resin syrup dropped into tetrahydrofuran (THF) and M2 is the mass of the solid formed by drying.

Further, the (meth)acrylic resin syrup may include a (meth)acrylic polymer having a polydispersity index (PDI) of about 1.4 to about 1.6. As used herein, the polydispersity index refers to a weight average molecular weight divided by a number average molecular weight (Mw/Mn). The polydispersity index may be measured using gel permeation chromatography (GPC). The instrument used for the analysis is Alliance Waters E2695. 4 mg of M2 is extracted from the dried solid and transferred into a 10 mL volumetric flask, and then the flask is filled with tetrahydrofuran (THF). This solution is filtered with a 5 μm Teflon filter to inject 200 μL of the solution into the Waters E2695 to measure both the weight average molecular weight and the number average molecular weight.

As described above, the composition for artificial marble may have proper physical properties for producing artificial marble by including a polymer having a polydispersity index within the above range while having (meth)acrylic syrup with the conversion rate within the above range.

The inorganic filler is included in an amount of 160 parts to 190 parts by weight, based on 100 parts by weight of the (meth)acrylic resin syrup. If the content of the inorganic filler is less than the above range, the cost is increased, and the artificial marble may have a plastic surface feel, which may deteriorate the surface quality. When the content of the inorganic filler is more than the above range, the elongation is greatly decreased and cracks may occur in the process of producing the artificial marble.

The inorganic filler may include, but is not limited to, at least one selected from the group consisting of calcium carbonate, aluminum hydroxide, magnesium hydroxide, silica, and combinations thereof.

In addition, the inorganic filler may include particles having an average particle diameter of from about 10 $\mu$m to about 80 $\mu$m. The average particle diameter may be measured using, for example, SEM/TEM equipment.

When the average particle diameter of the inorganic filler is less than the above range, the monomer absorption rate is increased due to the roughness of the surface of the inorganic filler, and the viscosity is increased, so that product formation is difficult. When the average particle diameter exceeds the above range, the viscosity is lowered, resulting in a non-uniform state of the product due to precipitation and separation of the inorganic particles and the resin.

In another embodiment of the present disclosure, there is provided an artificial marble formed by thermosetting the composition for artificial marble. The composition for artificial marble is as described above in the above embodiments.

Fig. 1 is a photograph showing an artificial marble molded using a composition for artificial marble according to the present disclosure. It can be seen that a deep and round molding is delicately and specifically expressed without cracks or breakage during the molding.

The artificial marble formed with the composition for artificial marble can simultaneously realize excellent high-temperature moldability and excellent tensile strength.

The artificial marble may be formed by thermosetting the artificial marble composition. Specifically, the artificial marble may be formed by curing the artificial marble composition at about 25°C to about 50°C using a room temperature curing agent.

Further, the artificial marble may be formed by thermosetting at about 40°C to about 95°C, thereby increasing the production rate of the artificial marble and facilitating the mass production. Although the artificial marble is thermoset under high temperature conditions within the above-mentioned range, the molding can smoothly proceed without cracks or breakage on the surface.

In other embodiments, the artificial marble may have an elongation of, for example, from about 80% to about 200%. The elongation may be measured according to the measurement conditions under ASTM E 21.

The artificial marble has a high elongation in the above range, so that the artificial marble can be thermoformed into a molded article having a three-dimensional shape such as a wash basin having a square shape or a deep depth, a rounded corner column, and the like. Specifically, the artificial marble has a high elongation in the above range, so that the bending angle of the artificial marble can be formed with a uniform forming angle of about 1R. Accordingly, the artificial marble can be formed in a delicate and concrete shape with an excellent mold forming angle. The forming angle of the mold is obtained by designing with CAD2017, and then forming MDF mold by using a CNC milling machine to make a three-dimensional mold, followed by directly pressing a plate heated at 180°C for 10 minutes.

The artificial marble has a high elongation, and even if it contains a high content of inorganic filler, the surface may not crack or break during the heat curing under high temperature conditions.

Further, the artificial marble may have a flexural strength of about 6.5 Mpa to about 8.5 Mpa. When the flexural strength of the artificial marble is less than the above range, it may be broken easily during the processing. The flexural strength may be measured according to the measurement conditions under ASTM D 790.

The artificial marble may have a specific gravity of about 1.6 to about 1.7.

Hereinafter, specific examples of the present disclosure will be described. It is to be understood, however, that the examples described below are only for illustrative purposes or to illustrate the present disclosure, and the present disclosure should not be construed as being limited thereto.

**EXAMPLES**

Example 1 (not according to the invention)

A resin composition for syrup containing 28% by weight of polymethylmethacrylate was mixed with 72% by weight of methyl methacrylate, followed by stirring at 60°C for 30 minutes to prepare a (meth)acrylic resin syrup.

Then, a composition for artificial marble comprising 0.5% by weight of a polyethylene glycol di(meth)acrylate oligomer having a glass transition temperature of 45°C to 55°C and a weight average molecular weight of 53,000, 61% by weight of an inorganic filler, and 0.3% by weight of a thermal initiator was mixed with 38% by weight of the (meth)acrylic resin syrup, and stirred to prepare an artificial marble in an oven at 75°C.

Example 2 (not according to the invention)

A resin composition for syrup containing 28% by weight of polymethylmethacrylate was mixed with 72% by weight of methyl methacrylate, followed by stirring at 60°C for 30 minutes to prepare a (meth)acrylic resin syrup.

Then, a composition for artificial marble comprising 0.5% by weight of a polyethylene glycol 400 di(meth)acrylate having a glass transition temperature of -25°C to 30°C and a molecular weight of 598, 61% by weight of an inorganic filler, and 0.3% by weight of a thermal initiator was mixed with 38% by weight of the (meth)acrylic resin syrup, and stirred to prepare an artificial marble in an oven at 75°C.

Example 3 (not according to the invention)

A resin composition for syrup containing 28% by weight of polymethylmethacrylate was mixed with 72% by weight of methyl methacrylate, followed by stirring at 60°C for 30 minutes to prepare a (meth)acrylic resin syrup.

Then, a composition for artificial marble comprising 0.8% by weight of a poly dimethyl methacrylate oligomer having a glass transition temperature of 45°C to 55°C and a weight average molecular weight of greater than or equal to 100,000, 61% by weight of an inorganic filler, and 0.3% by weight of a thermal initiator was mixed with 38% by weight of the (meth)acrylic resin syrup, and stirred to prepare an artificial marble in an oven at 75°C.

Comparative Example 1

A resin composition for syrup containing 28% by weight of polymethylmethacrylate was mixed with 72% by weight of methyl methacrylate, followed by stirring at 60°C for 30 minutes to prepare a (meth)acrylic resin syrup.

Then, a composition for artificial marble comprising 0.5% by weight of an ethylene glycol dimethacrylate monomer having a glass transition temperature of 45 °C to 55°C and a molecular weight of 198, 61% by weight of an inorganic filler, and 0.3% by weight of a thermal initiator was mixed with 38% by weight of the (meth)acrylic resin syrup, and stirred to prepare an artificial marble in an oven at 75°C.

Comparative Example 2

A resin composition for syrup containing 28% by weight of polymethylmethacrylate was mixed with 72% by weight of methyl methacrylate, followed by stirring at 60°C for 30 minutes to prepare a (meth)acrylic resin syrup.

Then, a composition for artificial marble comprising 0.5% by weight of a trimethylolpropane trimethacrylate monomer having a glass transition temperature of 25°C to 45°C and a molecular weight of 338, 61% by weight of an inorganic filler, and 0.3% by weight of a thermal initiator was mixed with 38% by weight of the (meth)acrylic resin syrup, and stirred to prepare an artificial marble in an oven at 75°C.

**Experimental Example**

The compositions for the respective artificial marbles according to Examples 1 to 3 and Comparative Examples 1 and 2 were thermally cured at 75°C to prepare an artificial marble with a thickness of 12 mm. Then, the high-temperature moldability, elongation, and tensile strength for the artificial marbles were evaluated. The results are shown in Table 1 below.

**Evaluation Method**

Experimental Example 1: High temperature moldability

Each of the artificial marbles prepared from the respective compositions for artificial marble according to Examples 1 and 3 and Comparative Examples 1 and 2 was heated at 180°C for 10 minutes. Drawing process was then performed with a predetermined curvature radius under the conditions of 25°C and 70 MPa using 1-ton press apparatus, and then each of the marbles was placed on a wooden molding with a rectangular barrel shape having four round portions and pressed. Specifically, the depth formed in each of the above molded products was 150 mm, and the horizontal axis inner curvature radius (Rh) and the vertical axis inner curvature radius (Rv) for the round portion were 23 mm, respectively.

When the round portion of the molded product was visually observed, it was evaluated as being excellent in high-temperature moldability and indicated as "o" in the case where no cracks or broken parts appear on the surface, and it was evaluated as being poor in high temperature moldability and indicated as "X" in the case where cracks or broken parts appear on the surface.

Experimental Example 2: Elongation

Each of the artificial marbles prepared from the compositions for artificial marble according to Examples 1 and 3 and Comparative Examples 1 and 2 was made into a specimen of 120 mm x 10 mm x 1.5 mm with a CNC engraver (TinyCNC-6012).

The elongation of each specimen was measured using a tensile machine (Instron 8872, equipped with 160°C heating chamber). The prepared specimen was mounted on Instron 8872, and then the chamber was closed, and then heated at 160°C for 10 minutes. At this time, the temperature should stabilize at 160°C within 10 minutes. Subsequently, the specimen was pulled with the tensile machine and the % elongation of the extended length from the initial length was measured.

Table 1

|  | High temperature moldability | Elongation (%) |
|---|---|---|
| Ex. 1 | ○ | 85 ~ 102% |
| Ex. 2 | ○ | 100 ~ 120% |
| Ex. 3 | ○ | 128 ~ 148% |
| C. Ex. 1 | X | 26 ~ 32% |
| C. Ex. 2 | X | 28 ~ 42% |

As shown in Table 1, it can be seen that the artificial marble prepared from the artificial marble composition of the examples shows high elongation and excellent high-temperature moldability. Fig. 1 is an artificial marble prepared from an exemplary composition. It can be seen from Fig. 1 that a deep and round molding is delicately and specifically expressed without cracks or breakage during the molding process. That is, the artificial marble formed from the composition for artificial marble, which is excellent with a molding angle of 4R or less, such as about 1R, can simultaneously realize excellent high-temperature moldability and excellent tensile strength.

**Claims**

1. A composition for artificial marble comprising

   a bifunctional (meth)acrylate-based monomer,
   a bifunctional (meth)acrylate-based oligomer,
   an inorganic filler and
   a (meth)acrylic resin syrup;
   wherein bifunctional indicates that there are two acrylate groups,
   wherein the inorganic filler is contained in an amount of 160 parts to 190 parts by weight based on 100 parts by weight of the (meth)acrylic resin syrup,
   wherein the bifunctional (meth)acrylate-based monomer has a molecular weight of from 330 g/mol to 1,500 g/mol;
   wherein the bifunctional (meth)acrylate-based oligomer has a glass transition temperature of from 45°C to 105°C and a weight average molecular weight of from 20,000 g/mol to 120,000 g/mol, the glass transition temperature being measured by DSC and the weight average molecular weight being measured by GPC;
   wherein the (meth)acrylic resin syrup is formed by subjecting a composition comprising a (meth)acrylic monomer to thermal polymerization or photopolymerization;
   and wherein the (meth)acrylic resin syrup is contained in an amount of 32% by weight to 38% by weight.

2. The composition for artificial marble according to claim 1, comprising 0.18% by weight to 0.7% by weight of the bifunctional (meth)acrylate-based monomer.

3. The composition for artificial marble according to claim 1, comprising 0.18% by weight to 1.0% by weight of the bifunctional (meth)acrylate-based oligomer.

4. The composition for artificial marble according to claim 1, further comprising at least one selected from the group consisting of a thermal initiator, a crosslinking agent, a defoaming agent, a coupling agent, and combinations thereof.

5. An artificial marble formed by thermosetting a composition for artificial marble according to any one of claims 1 to 4.

**Patentansprüche**

1.  Zusammensetzung für Kunstmarmor, umfassend

    ein bifunktionelles (meth)acrylatbasiertes Monomer,
    ein bifunktionelles (meth)acrylatbasiertes Oligomer,
    einen anorganischen Füllstoff und
    einen (Meth)Acrylharzsirup;
    wobei bifunktionell angibt, dass zwei Acrylatgruppen vorhanden sind,
    wobei der anorganische Füllstoff in einer Menge von 160 Teilen bis 190 Gewichtsteilen bezogen auf 100 Gewichtsteile des (Meth)Acrylharzsirups enthalten ist,
    wobei das bifunktionelle (meth)acrylatbasierte Monomer ein Molekulargewicht von 330 g/mol bis 1.500 g/mol aufweist;
    wobei das bifunktionelle (meth)acrylatbasierte Oligomer eine Glasübergangstemperatur von 45 °C bis 105 °C und ein gewichtsmittleres Molekulargewicht von 20.000 g/mol bis 120.000 g/mol aufweist, wobei die Glasübergangstemperatur durch DSC gemessen wird und das gewichtsmittlere Molekulargewicht durch GPC gemessen wird; wobei der (Meth)Acrylharzsirup durch Unterziehen einer Zusammensetzung, umfassend ein (Meth)Acrylmonomer, einer thermischen Polymerisation oder Photopolymerisation, ausgebildet wird;
    und wobei der (Meth)Acrylharzsirup in einer Menge von 32 Gew.-% bis 38 Gew.-% enthalten ist.

2.  Zusammensetzung für Kunstmarmor nach Anspruch 1, umfassend 0,18 Gew.-% bis 0,7 Gew.-% des bifunktionellen (meth)acrylatbasierten Monomers.

3.  Zusammensetzung für Kunstmarmor nach Anspruch 1, umfassend 0,18 Gew.-% bis 1,0 Gew.-% des bifunktionellen (meth)acrylatbasierten Oligomers.

4.  Zusammensetzung für Kunstmarmor nach Anspruch 1, ferner umfassend mindestens eines, ausgewählt aus der Gruppe, bestehend aus einem thermischen Initiator, einem Vernetzungsmittel, einem Entschäumer, einem Haftvermittler und Kombinationen davon.

5.  Kunstmarmor, ausgebildet durch Heißhärten einer Zusammensetzung für Kunstmarmor nach einem der Ansprüche 1 bis 4.

**Revendications**

1.  Composition pour marbre artificiel comprenant

    un monomère à base de (méth)acrylate bifonctionnel,
    un oligomère à base de (méth)acrylate bifonctionnel,
    une charge inorganique et
    une résine (méth) acrylique ;
    bifonctionnel indiquant qu'il existe deux groupes acrylate,
    la charge inorganique étant contenue en une quantité de 160 parties à 190 parties en poids sur la base de 100 parties en poids du sirop de résine (méth)acrylique,
    le monomère à base de (méth)acrylate bifonctionnel ayant un poids moléculaire allant de 330 g/mol à 1500 g/mol ;
    l'oligomère à base de (méth)acrylate bifonctionnel ayant une température de transition vitreuse de 45 °C à 105 °C et un poids moléculaire moyen en poids de 20 000 g/mol à 120 000 g/mol, la température de transition vitreuse étant mesurée par DSC et la masse moléculaire moyenne en poids étant mesurée par GPC ; le sirop de résine (méth)acrylique étant formé en soumettant une composition comprenant un monomère (méth)acrylique à une polymérisation thermique ou une photopolymérisation ;
    et le sirop de résine (méth)acrylique étant contenu en une quantité de 32 % en poids à 38 % en poids.

2.  Composition pour marbre artificiel selon la revendication 1, comprenant 0,18 % en poids à 0,7 % en poids du monomère à base de (méth)acrylate bifonctionnel.

3.  Composition pour marbre artificiel selon la revendication 1, comprenant 0,18 % en poids à 1,0 % en poids de l'oligomère à base de (méth)acrylate bifonctionnel.

**4.** Composition pour marbre artificiel selon la revendication 1, comprenant en outre au moins un élément choisi dans le groupe constitué d'un initiateur thermique, d'un agent de réticulation, d'un agent antimousse, d'un agent de couplage et des combinaisons de ceux-ci.

**5.** Marbre artificiel formé par thermodurcissement d'une composition pour marbre artificiel selon l'une quelconque des revendications 1 à 4.

FIG. 1

**EP 3 613 714 B1**

## REFERENCES CITED IN THE DESCRIPTION

### Patent documents cited in the description

- US 6323259 B1